# EUROPEAN PATENT APPLICATION

(11) **EP 2 124 397 A1**
(43) Date of publication of application: **25.11.2009**
(21) Application number: 07817367.1
(22) Date of filing: 12.12.2007
(51) Int. Cl.: H04L 12/56

(54) **A METHOD FOR TRANSFERING THE IP TRANSMISSION SESSION AND THE EQUIPMENT WHERETO**

(30) Priority: 04.01.2007 CN 200710072911
(71) Applicant: Huawei Technologies Co., Ltd., Longgang District, Shenzhen Guangdong 518129 (CN)
(72) Inventor: XIA, Zhongqi, Guangdong 518129 (CN); ZHANG, Jian, Shenzhen Guangdong 518129 (CN); CHEN, Hongfei, Guangdong 518129 (CN)
(74) Representative: Thun, Clemens
(86) International application number: PCT/CN2007/071223
(87) International publication number: WO 2008/083572

(57) **Abstract**

A method for transferring an IP transmission session is disclosed, including the following: a transmission session is created between the first node and second node based on a single IP protocol; the first node and second node obtain a transferable address pair by exchanging the session transfer management signaling; the transferable address pair is checked for bidirectional reachability; the transferable address pair is available if reachable in both directions, or is not available if unreachable in either direction; and the transmission session is transferred through the available transferable address pair. An apparatus for transferring an IP transmission session is also disclosed. Through the technical solution under the present invention, a session can be transferred in a network where IPv4 coexists with IPv6 without affecting continuity of the end-to-end transmission session, thus fulfilling the requirements in the transition period during which IPv4 coexists with IPv6.

## Description

This application claims priority to the Chinese Patent Application No. 200710072911.5, filed with the Chinese Patent Office on January 04, 2007 and entitled "Method and Apparatus for Transferring IP Transmission Session", the contents of which are incorporated herein by reference in their entirety.

### FIELD OF THE INVENTION

The present invention relates to the communication field, and in particular, to a method and apparatus for transferring an IP transmission session.

### BACKGROUND

With the rapid development of the Internet, the Internet Protocol version 4 (IPv4) encounters the shortage of addresses. Therefore, the Internet Protocol version 6 (IPv6) attracts more and more attention and is put into the spotlight. The IPv6 is a 2^{nd} generation standard protocol of the network-layer protocol, and is also known as IP next generation (IPng). It is a set of specifications designed by the Internet Engineering Task Force (IETF), and is an upgrade from the IPv4. The length of an IP address in IPv6 is upgraded from 32 bits to 128 bits, thus overcoming the shortage of IPv4 addresses. The IPv6 makes many other improvements other than the enormous address space as against IPv4.

The transfer from an IPv4 network to an IPv6 network is a gigantic project, and will not be accomplished in a short term. Therefore, both IPv4 and IPv6 networks coexist in a long term.

Currently, there are numerous network-based applications. For such applications, being adaptive to a new network communication protocol is a massive project which cannot be accomplished in a short term. Therefore, running old unreconstructed network applications on the new IPv6 network becomes an enormous potential requirement in practice.

### SUMMARY

A method for transferring an IP transmission session disclosed in an embodiment of the present invention includes:
creating a transmission session based on a single IP protocol between a first node and a second node;
obtaining, by the first node and second node, a transferable address pair by exchanging session transfer management signaling;
detecting bidirectional reachability for the transferable address pair, and obtaining an available transferable address pair; and
transferring the transmission session by using the available transferable address pair.

An apparatus for transferring an IP transmission session disclosed in an embodiment of the present invention includes:
a transport-layer unit, adapted to receive a packet from the application layer, encapsulate the packet on the transport layer, and transmit the packet to the IP endpoint sub-layer unit;
an IP endpoint sub-layer unit, adapted to receive the packet from the transport-layer unit, perform endpoint function processing for the packet, and transmit the packet to the IP session transfer sub-layer unit;
an IP session transfer sub-layer unit, adapted to receive the packet from the IP endpoint sub-layer unit, perform session transfer processing for the packet, and transmit the packet to the IP route sub-layer unit; and
an IP route sub-layer unit, adapted to receive the packet from the IP session transfer sub-layer unit, perform route processing for the packet, and transmit the packet to the link layer.

An apparatus for transferring an IP transmission session disclosed in another embodiment of the present invention includes:
an IP route sub-layer unit, adapted to receive a packet from the link layer, perform route processing for the packet, and transmit the packet to the IP session transfer sub-layer unit;
an IP session transfer sub-layer unit, adapted to receive the packet from the IP route sub-layer unit, perform session transfer processing for the packet, and transmit the packet to the IP endpoint sub-layer unit; and
an IP endpoint sub-layer unit, adapted to receive the packet from the IP session transfer sub-layer unit, perform endpoint function processing for the packet, and transmit the packet to the transport-layer unit; and
a transport-layer unit, adapted to receive the packet from the IP endpoint sub-layer unit, decapsulate the packet on the transport layer, and transmit the packet to the application layer.

An apparatus for transferring an IP transmission session disclosed in another embodiment of the present invention includes:
a transport-layer unit, adapted to receive a packet from the application layer, encapsulate the packet on the transport layer, decapsulate the received packet on the transport layer, and transmit the packet to the application layer;
an IP endpoint sub-layer unit, adapted to receive the encapsulated packet from the transport-layer unit, perform endpoint function processing for the received packet, and transmit the packet to the transport-layer unit;
an IP session transfer sub-layer unit, adapted to receive the packet which has undergone the endpoint function processing from the IP endpoint sub-layer unit, perform session transfer processing for the received packet, and transmit the packet to the IP endpoint sub-layer unit; and
an IP route sub-layer unit, adapted to receive the packet which has undergone the session transfer processing from the IP session transfer sub-layer unit, perform route processing for the packet and transmit the packet to the link layer, receive the packet from the link layer, perform route processing for the received packet, and transmit the packet to the IP session transfer sub-layer unit.

The embodiments of the present invention enable a transmission session to be transferred between different types of IP networks. Even if the transport layer does not support IPv6, the end-to-end IPv6 communication is also enabled, thus satisfying the requirements raised in the evolution from IPv4 to IPv6. The embodiments of the present invention support traffic engineering between IPv4 and IPv6. The technical solution under the present invention enables backup of a link between dual-stack nodes, thus enhancing communication reliability.

### BRIEF DESCRIPTION OF THE DRAWINGS

Figure 1 schematically shows session transfer in a hybrid IP network according to an embodiment of the present invention;

Figure 2 shows a schematic basic framework of session transfer in a hybrid IP network according to an embodiment of the present invention;

Figure 3 shows a schematic process of session transfer in a hybrid IP network according to an embodiment of the present invention;

Figure 4 shows a schematic process of managing session transfer management signaling automatically according to an embodiment of the present invention;

Figure 5 schematically shows a tunnel transfer method according to an embodiment of the present invention;

Figure 6 schematically shows a label transfer method according to another embodiment of the present invention;

Figure 7 shows a schematic dual-stack node apparatus for session transfer according to an embodiment of the present invention; and

Figure 8 schematically shows an IP session transfer sub-layer unit according to an embodiment of the present invention.

### DETAILED DESCRIPTION

The present invention is hereinafter described in detail with reference to embodiments and accompanying drawings.

A method for transferring a session in a hybrid IP network, namely, a network where IPv4 coexists with IPv6, is provided in an embodiment of the present invention to enable transfer of an end-to-end transmission session between different IP networks without affecting continuity of the session.

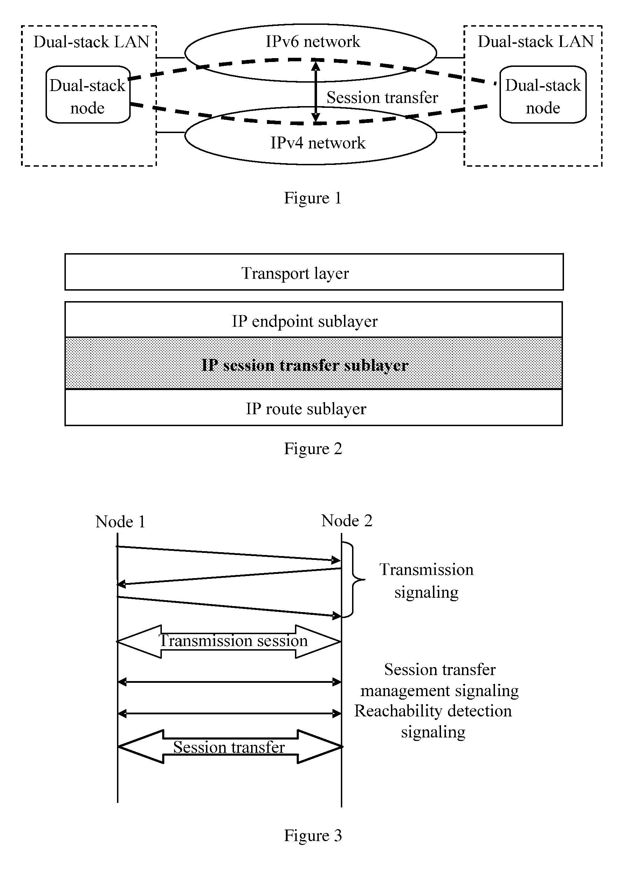

Figure 1 schematically shows session transfer in a hybrid IP network in an embodiment of the present invention. In Figure 1, two Local Area Networks (LANs) are connected to an IPv4 network and an IPv6 network. The two LANs are dual-stack networks, and two nodes located in the two LANs respectively are dual-stack nodes. A transmission session is created between the two nodes. For example, the two nodes are connected through a Transmission Control Protocol (TCP) or User Datagram Protocol (UDP). The transmission session can be transferred between the IPv4 network and IPv6 network no matter whether it is based on IPv4 or IPv6, and the transfer process is not perceptible to the application layer and transport layer.

Figure 2 shows a schematic basic framework of session transfer in a hybrid IP network in an embodiment of the present invention. The two dual-stack nodes need to perform the session transfer function on the IP layer in order to make the session transfer process imperceptible to the application layer and transport layer. The IP layer is functionally divided into two sub-layers: one is an IP endpoint sub-layer, adapted to implement the functions of the IP endpoint, including IP layer encapsulation, fragmentation and defragmentation, security authentication and encryption, and, for IPv6, also including destination options; and the other is an IP route sub-layer, adapted to implement routing functions, including encapsulation and processing related to the route options, for example, processing of the IPv6 route header, processing of loose and stringent IPv4 source route options, and route forwarding processing of the IP packet. As shown in Figure 2, a sub-layer (namely, IP session transfer sub-layer) is inserted into the IP layer to manage session transfer. The IP session transfer sub-layer is located between the IP endpoint sub-layer and IP route sub-layer.

Figure 3 shows a schematic process of session transfer in a hybrid IP network in an embodiment of the present invention. Node 1 and node 2 are two dual-stack nodes. The process from creating a transmission session to transferring the session includes the following steps:
(A) A transmission session is created between node 1 and node 2 based on a single IP protocol such as IPv4 or IPv6 by exchanging the transmission signaling, where the session may also be connected through a TCP or UDP protocol.
(B) Node 1 exchanges the session transfer management signaling with node 2 to obtain the transferable address pair, and the corresponding transfer method and priority.
(C) Reachability detection signaling is applied to check whether the foregoing transferable address pair is reachable in both directions. The transferable address pair is available if reachable in both directions, and is not available if unreachable in either direction. As a result, an available transferable address pair is obtained. In this process, the speed and bandwidth may be detected, and the detection results (for example, availability, priority information which is set based on speed and bandwidth) are marked in the corresponding transferable address pair.
(D) The session is transferred by using the available transferable address pair.
Generally, as implied by some factors such as traffic engineering or link failure, the IP session transfer sub-layer takes effect, and an available transferable address pair with higher priority is selected to transfer the session.

The session transfer management signaling is exchanged in order to obtain a transferable address pair. Supposing two communication nodes A and B, node A has an IPv4 address "*A*₄", and has IPv6 addresses _{"}A₆^{'}_{"} and _{"}A^{"}_{6"} accordingly, node B has an IPv4 address "*B*₄", and has IPv6 addresses _{"}B^{'}_{6"} and _{"}B^{"}_{6"} A transmission session is created between node A and node B through *A*₄ and *B*₄. The session transfer management signaling is designed to enable both parties to discover the peer's IPv6 address mutually. The transferable address pairs (A'_{6,}B'₆), (A'₆ and B'₆₎, (A"_{6,} B'₆), and (A"_{6,} B"₆) are created, and the corresponding address pair attributes (for example, transfer method, priority, speed, and bandwidth of the transferable address pair) are created for each transferable address pair. The priority may be determined according to the speed and bandwidth, or specified by the user.

In practice, the session transfer management signaling may be managed manually or automatically. If the signaling is managed manually, the candidate address pairs for communicating with the peer on the two dual-stack nodes manually configured. The information such as priority, transfer method, speed and bandwidth may be marked in the candidate address pairs.

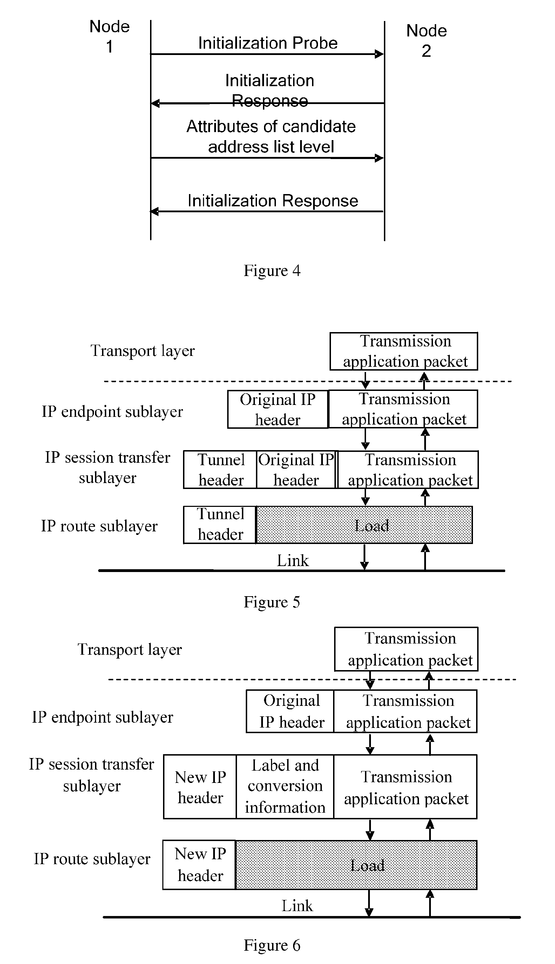

Figure 4 shows a process of managing session transfer management signaling automatically in an embodiment of the present invention. The process includes the following steps:
(B1) Node 1 sends an initialization Probe message to node 2 to check whether node 2 supports session transfer. If node 2 does not respond in a long time, node 2 does not support transfer in a hybrid network. This message includes the original address pair of the transmission session, namely, the address pair of the transmission session created between node 1 and node 2, and a local label which marks the state and environment of the session transfer.
(B2) After receiving the initialization Probe message, node 2 sends an initialization Response message to node 1, where the message carries the original address pair of the transmission session.
(B3) After receiving the initialization Response message, node 1 sends an address exchange message to node 2, where the message carries a candidate address list of node 1, and may also carry other information such as priority, supported session transfer method, and a local label which marks the state and environment of the session transfer.
(B4) After receiving the address exchange message, node 2 returns an address exchange message to node 1, where the returned message carries a candidate address list of node 2, and may also carry other information such as priority, supported session transfer method, and a local label which marks the state and environment of the session transfer.

Upon completion of message exchange in the foregoing four steps, the transferable address pairs of node 1 and node 2 are obtained.

Because the session transfer works on the IP sub-layer, the session transfer management signaling also works on the IP sub-layer. The session transfer management signaling may be carried over the Internet Control Message Protocol (ICMP), as shown in Table 1.

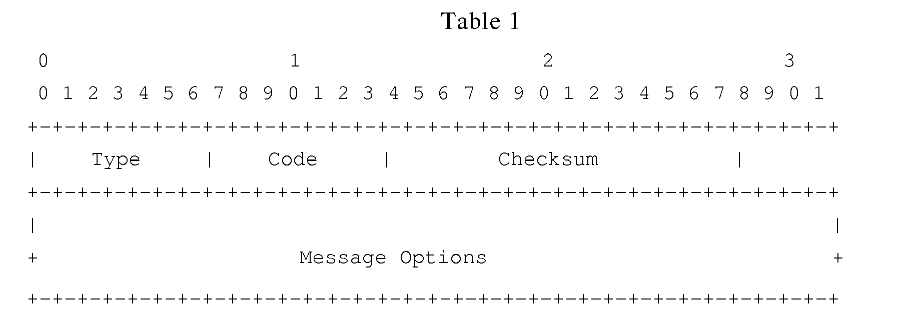

In the bearer format shown in Table 1, the Type value may be assigned by the Internet Assigned Number Authority (IANA), and the Code value may be defined according to different signaling messages. The message options include the content carried by the signaling.

The session transfer management signaling may also be carried by defining a new IP protocol number such as an extension header. Taking the IPv6 bearer header of the transfer signaling as an example, the format of the extension header is shown in Table 2.

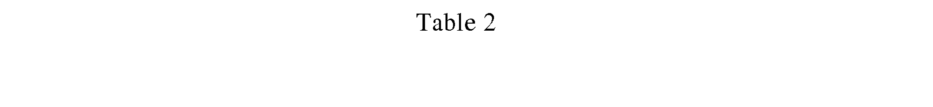

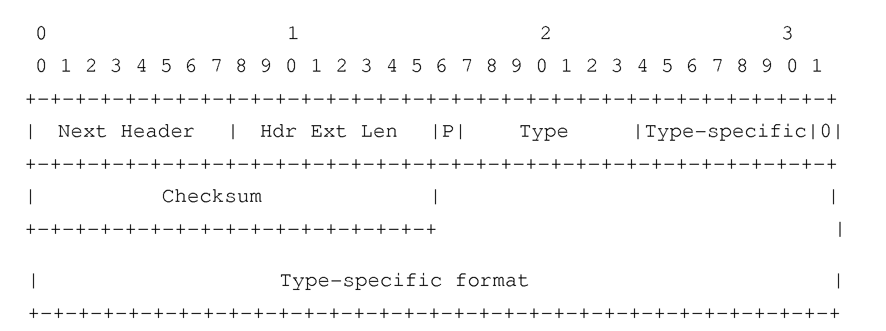

In the format of the IPv6 bearer header of the transfer signaling shown in Table 2, "Next Header" indicates the protocol number of the header next to this header; "Hdr Ext Len" indicates the length of the header; "P" is a flag which identifies whether the packet is a load packet or a signaling control packet; "Type" indicates the message type; and "Type-specific format" includes the message-specific content. When the value of P is 1, the information subsequent to P is a conversion label and its relevant information, and does not include "Type", "Type-specific" and "Checksum" any more. The signaling bearer header format of the IPv4 is similar to that of IPv6, and is not repeated here any further.

The transferable address pair is obtained through the session transfer management signaling so that the address pair is available for selecting at the time of session transfer. However, the transferable address pair needs to be further checked for bidirectional reachability. Therefore, a reachability detection protocol such as Internet Control Message Protocol (ICMP) is required for detecting the bidirectional reachability of the transferable address pair.

Session transfer may be performed through tunnel transfer or label transfer.

Figure 5 shows a tunnel transfer method in an embodiment of the present invention. Taking the session transfer in the packet transmitting direction as an example, the process of implementing session transfer through tunnel transfer is as follows:
after receiving a packet from the application layer, the transport layer encapsulates the packet, and transmits the packet downstream to the IP endpoint sub-layer;
after receiving the packet from the transport layer, the IP endpoint sub-layer performs endpoint function processing, for example, fragmentation, security encryption and original IP encryption, and then transmits the processed packet to the IP session transfer sub-layer;
after receiving the packet from the IP endpoint sub-layer, the IP session transfer sub-layer performs tunnel encapsulation for the packet according to the preferred session transfer address pair, and then transmits the packet to the IP route sub-layer. In this step, the tunnel encapsulation may be performed through IP over IP, or Generic Routing Encapsulation (GRE); and
after receiving the packet, the IP route sub-layer performs normal route processing for the tunnel header, and then transmits it to the link layer.

The foregoing process is a session transfer process in the packet transmitting direction; the session transfer process in the packet receiving direction is the inverse of the foregoing process, including:
after receiving the packet from the link layer, the IP route sub-layer performs normal route processing for the tunnel header of the packet, and then transmits the packet to the IP session transfer sub-layer;
after receiving the packet from the IP route sub-layer unit, the IP session transfer sub-layer performs tunnel decapsulation for the packet, and then transmits the packet to the IP endpoint sub-layer;
after receiving the packet from the IP session transfer sub-layer, the IP endpoint sub-layer performs endpoint function processing for the packet such as defragmentation, decryption, and decapsulation, and then transmits the packet to the transport layer;
after receiving the packet from the IP endpoint sub-layer, the transport layer decapsulates the packet, and transmits the packet to the application layer.

Figure 6 shows a label transfer method in another embodiment of the present invention. Taking the session transfer in the packet transmitting direction as an example, the process of implementing session transfer through label transfer is as follows:
after receiving a packet from the application layer, the transport layer encapsulates the packet, and transmits the packet downstream to the IP endpoint sub-layer;
after receiving the packet from the transport layer, the IP endpoint sub-layer performs endpoint function processing for the packet such as fragmentation, security encryption, and original IP encapsulation, and then transmits the packet to the IP session transfer sub-layer;
after receiving the packet from the IP endpoint sub-layer, the IP session transfer sub-layer applies the preferred session transfer address pair to replace the original IPv4/IPv6 header with IPv6/IPv4 header, inserts a new extension header after the converted IP header, and then transmits the packet to the IP route sub-layer. In this step, the extension header may be in the format shown in Table 2, and includes a conversion label and some transmitter-side original information which is lost in this conversion but needs to be authenticated at the receiver; and
after receiving the packet from the IP session transfer sub-layer, the IP route sub-layer performs normal route processing for the substituted IPv6/IPv4 header, and then transmits the packet to the link layer.

The foregoing process is a session transfer process in the packet transmitting direction. The session transfer process in the packet receiving direction is the inverse of the foregoing process. That is, after receiving the packet from the IP route sub-layer, the IP session transfer sub-layer applies the label and conversion information carried in the packet to restore the original IP header, and transmits the packet to the IP endpoint sub-layer.

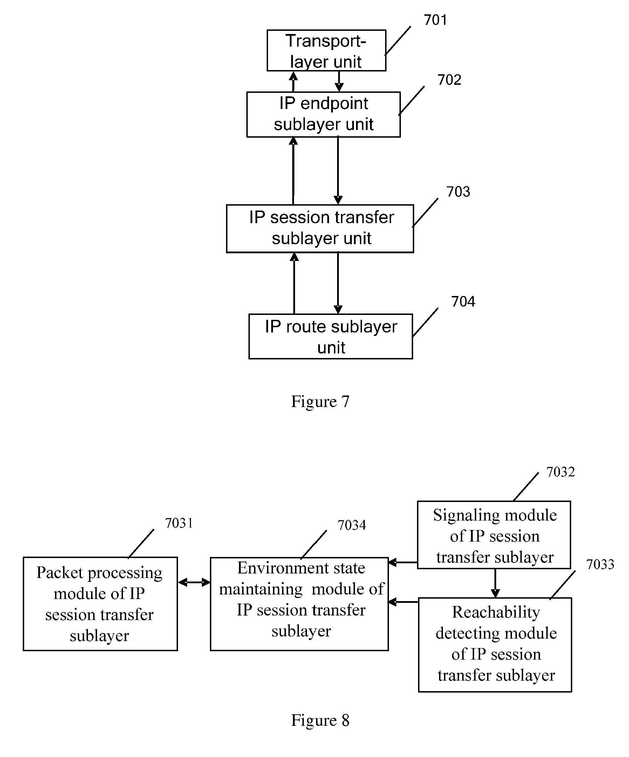

Figure 7 shows a session transfer apparatus in an embodiment of the present invention. The apparatus includes:
a transport-layer unit 701, adapted to receive a packet from the application layer, encapsulate the packet on the transport layer, and transmit the packet to the IP endpoint sub-layer unit 702;
an IP endpoint sub-layer unit 702, adapted to receive the packet from the transport layer unit 701, perform endpoint function processing for the packet such as fragmentation, security encryption, and original IP encapsulation, and then transmit the processed packet to the IP session transfer sub-layer unit 703;
an IP session transfer sub-layer unit 703, adapted to receive the packet from the IP endpoint sub-layer unit 702, perform session transfer processing for the packet, and transmit the packet to the IP route sub-layer unit 704; and
an IP route sub-layer unit 704, adapted to receive the packet from the IP session transfer sub-layer unit 703, perform route processing for the packet, and transmit the packet to the link layer.

Alternatively, The apparatus includes:
an IP route sub-layer unit 704, adapted to receive a packet from the link layer, and perform route processing for the packet; or receive a packet from the link layer, perform route processing for the packet, and then transmit the packet to the IP session transfer sub-layer unit 703;
an IP session transfer sub-layer unit 703, adapted to receive the packet from the IP route sub-layer unit 704, perform session transfer processing for the packet, and transmit the packet to the IP endpoint sub-layer unit 702;
an IP endpoint sub-layer unit 702, adapted to receive the packet from the IP session transfer sub-layer unit 703, perform endpoint function processing for the packet such as defragmentation, decryption, and decapsulation, and then transmit the processed packet to the transport-layer unit 701; and
a transport-layer unit 701, adapted to receive the packet from the IP endpoint sub-layer unit 702, decapsulate the packet on the transport layer, and transmit the packet to the application layer.

As shown in Figure 8, the IP session transfer sub-layer unit 703 includes:
an packet processing module of IP session transfer sub-layer 7031, adapted to: receive a packet from the IP endpoint sub-layer unit 702, and search the transfer environment state table according to the source address and destination address of the packet; submit the packet to the network layer route processing module directly if no corresponding state table entry is found; or perform tunnel encapsulation or packet header processing if the corresponding state table entry is found;
alternatively, the packet processing module of IP session transfer sub-layer 7031 is adapted to: receive a packet from the IP route sub-layer unit 704, search the transfer environment state table according to the source address and destination address; perform tunnel decapsulation or restore the packet header if the corresponding table entry is found; or transmit the packet to the IP endpoint sub-layer processing unit 702 directly if no corresponding table entry is found;
a signaling module of IP session transfer sub-layer 7032, adapted to obtain a transferable address pair;
an reachability detecting module of IP session transfer sub-layer 7033, adapted to detect bidirectional reachability for the obtained transferable address pair; and
an environment state maintaining module of IP session transfer sub-layer 7034, adapted to maintain the transfer environment state table according to the bidirectional reachability detection result and the transferable address pair.

The embodiments of the present invention enable a transmission session to be transferred between different types of IP networks. Even if the transport layer does not support IPv6, the end-to-end IPv6 communication is also enabled, thus satisfying the requirements raised in the evolution from IPv4 to IPv6. The embodiments of the present invention support traffic engineering between IPv4 and IPv6, and can be used for link backup of the dual-stack node, thus enhancing reliability of communication.

Although the invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection of the present invention.

## Claims

1. A method for transferring an IP transmission session, wherein, the transmission session is created between a first node and a second node based on a single IP protocol, and the method comprises:
obtaining, by the first node and the second node, a transferable address pair by exchanging session transfer management signaling;
detecting bidirectional reachability for the transferable address pair, and obtaining an available transferable address pair; and
transferring the transmission session by using the available transferable address pair.

2. The method of claim 1, wherein:
the transmission session is transferred through the available transferable address pair by means of tunnel encapsulation.

3. The method of claim 1, wherein:
the transmission session is transferred through the available transferable address pair by means of label transfer.

4. The method of claim 1, or claim 2, or claim 3, wherein the process of the first node and the second node obtaining the transferable address pair by exchanging the session transfer management signaling comprises:
sending, by the first node, an initialization Probe message to the second node;
sending, by the second node, an initialization Response message to the first node after receiving the initialization Probe message, wherein the initialization Response message carries an original address pair of the transmission session;
sending, by the first node, a first address exchange message to the second node after receiving the initialization Response message, wherein the first address exchange message carries a candidate address list of the first node;
returning, by the second node, a second address exchange message to the first node after receiving the first address exchange message, wherein the second address exchange message carries a candidate address list of the second node; and
obtaining the transferable address pair according to the candidate address list of the first node and the candidate address list of the second node.

5. The method of claim 4, wherein the session transfer management signaling is carried over an Internet Control Message Protocol (ICMP).

6. The method of claim 4, wherein the session transfer management signaling is implemented by defining a new IP protocol number.

7. The method of claim 1, or claim 2, or claim 3, wherein the available transferable address pair of top priority is selected for transferring the transmission session.

8. An apparatus for transferring an IP transmission session, comprising:
a transport-layer unit, adapted to receive a packet from an application layer, and encapsulate the packet on the transport layer;
an IP endpoint sub-layer unit, adapted to receive the encapsulated packet from the transport-layer unit, and perform endpoint function processing for the packet;
an IP session transfer sub-layer unit, adapted to receive the packet which has undergone the endpoint function processing from the IP endpoint sub-layer unit, and perform session transfer processing; and
an IP route sub-layer unit, adapted to receive the packet which has undergone the session transfer processing from the IP session transfer sub-layer unit, perform route processing for the packet, and transmit the packet to a link layer.

9. The apparatus of claim 8, wherein the IP session transfer sub-layer unit comprises:
an packet processing module of a IP session transfer sub-layer, adapted to receive the packet from the IP endpoint sub-layer unit, search a transfer environment state table according to a source address and a destination address; perform tunnel encapsulation or packet header processing if a corresponding table entry is found; or transmit the packet to the IP route sub-layer unit directly if no corresponding table entry is found;
a signaling module of the IP session transfer sub-layer, adapted to obtain a transferable address pair;
an reachability detecting module of the IP session transfer sub-layer, adapted to detect bidirectional reachability for the obtained transferable address pair; and
an environment state maintaining module of the IP session transfer sub-layer, adapted to maintain the transfer environment state table according to a bidirectional reachability detection result and the transferable address pair.

10. An apparatus for transferring an IP transmission session, comprising:
an IP route sub-layer unit, adapted to receive a packet from a link layer, and perform route processing for the packet;
an IP session transfer sub-layer unit, adapted to receive the packet which has undergone the route processing from the IP route sub-layer unit, and perform session transfer processing;
an IP endpoint sub-layer unit, adapted to receive the packet which has undergone the session transfer processing from the IP session transfer sub-layer unit, and perform endpoint function processing; and
a transport-layer unit, adapted to receive the packet which has undergone the endpoint function processing from the IP endpoint sub-layer unit, decapsulate the packet on a transport layer, and transmit the packet to an application layer.

11. The apparatus of claim 10, wherein the IP session transfer sub-layer unit comprises:
an packet processing module of a IP session transfer sub-layer, adapted to: receive the packet from the IP route sub-layer unit, search a transfer environment state table according to a source address and a destination address; and perform tunnel decapsulation or restore a packet header if a corresponding table entry is found; or transmit the packet to the IP endpoint sub-layer unit directly if no corresponding table entry is found;
a signaling module of the IP session transfer sub-layer, adapted to obtain a transferable address pair;
an reachability detecting module of the IP session transfer sub-layer, adapted to detect bidirectional reachability for the obtained transferable address pair; and
an environment state maintaining module of the IP session transfer sub-layer, adapted to maintain the transfer environment state table according to a bidirectional reachability detection result and the transferable address pair.

12. An apparatus for transferring an IP transmission session, comprising:
a transport-layer unit, adapted to receive a packet from an application layer, encapsulate the packet on a transport layer, decapsulate the received packet on the transport layer, and transmit the packet to the application layer;
an IP endpoint sub-layer unit, adapted to receive the encapsulated packet from the transport-layer unit, perform endpoint function processing for the received packet, and transmit the packet to the transport-layer unit;
an IP session transfer sub-layer unit, adapted to receive the packet which has undergone the endpoint function processing from the IP endpoint sub-layer unit, perform session transfer processing for the received packet, and transmit the packet to the IP endpoint sub-layer unit; and
an IP route sub-layer unit, adapted to: receive the packet which has undergone the session transfer processing from the IP session transfer sub-layer unit, perform route processing for the packet and transmit the packet to a link layer; receive the packet from the link layer, and perform route processing for the received packet and transmit the packet to the IP session transfer sub-layer unit.

13. The apparatus of claim 12, wherein the IP session transfer sub-layer unit comprises:
an packet processing module of a IP session transfer sub-layer, adapted to: receive the packet from the IP endpoint sub-layer unit, search a transfer environment state table according to a source address and a destination address; perform tunnel encapsulation or packet header processing if a corresponding table entry is found; or transmit the packet to the IP route sub-layer unit directly if no corresponding table entry is found; and adapted to: receive the packet from the IP route sub-layer unit, search the transfer environment state table according to the source address and the destination address; and perform tunnel decapsulation or restore a packet header if the corresponding table entry is found; or transmit the packet to an IP endpoint sub-layer processing unit directly if no corresponding table entry is found;
a signaling module of the IP session transfer sub-layer, adapted to obtain a transferable address pair;
an reachability detecting module of the IP session transfer sub-layer, adapted to detect bidirectional reachability for the obtained transferable address pair; and
an environment state maintaining module of the IP session transfer sub-layer, adapted to maintain the transfer environment state table according to a bidirectional reachability detection result and the transferable address pair.
